# FASCICULE DE BREVET EUROPEEN

(11) **EP 1 742 070 B1**
(45) Date de publication et mention de la délivrance du brevet: **28.01.2015**
(21) Numéro de dépôt: 06291013.8
(22) Date de dépôt: 21.06.2006
(51) Int. Cl.: G01P 15/09, G01P 15/097, G01P 15/10

(54) **Capteur inertiel à courant pertubateur réduit par branches de compensation**
INERTIALER SENSOR MIT REDUZIERTEN STÖRSTRÖMEN DURCH KOMPENSATIONSLEITERBAHNEN
INERTIAL SENSOR WITH REDUCED ERROR CURRENTS DUE TO COMPENSATION CONDUCTORS

(30) Priorité: 04.07.2005 FR 0507069
(43) Date de publication de la demande: 10.01.2007
(73) Titulaire: SAGEM DEFENSE SECURITE, 92100 Boulogne Billancourt (FR)
(72) Inventeur: Brisson, Raphaël, 92600 Asnières sur Seine (FR); Featonby, Paul, Newcastle-Upon-Tyne NE2 3RA (GB)
(74) Mandataire: Fruchard, Guy

(56) Documents cités:
- EP-A- 1 353 185
- EP-A- 1 450 164
- FR-A- 2 685 964

## Description

La présente invention concerne un capteur inertiel piézo-électrique.

### ARRIERE PLAN DE L'INVENTION

On connaît, notamment du document FR-A-2 842 914, des capteurs inertiels réalisés à partir d'une plaque de quartz piézo-électrique dans laquelle sont délimités par gravure, un organe support, un cadre de découplage relié à l'organe support, et un organe vibrant relié à une masse associée au cadre de découplage, l'organe vibrant portant des électrodes d'excitation reliées à un circuit d'excitation comportant des pistes conductrices portées par la plaque piézo-électrique.

Le circuit d'excitation est alimenté avec un courant alternatif provoquant, par un effet piézo-électrique, la mise en vibration de l'organe vibrant selon une fréquence propre de vibration de cet élément vibrant. Lorsque le capteur est soumis à une accélération, la masse exerce sur l'élément vibrant une force qui modifie la fréquence de vibration de telle manière que la variation de la fréquence de vibration de l'élément vibrant permet de déterminer l'accélération à laquelle le capteur est soumis.

La modification de la fréquence de vibration est mesurée par la mesure d'un courant dans le circuit d'excitation.

On a toutefois constaté que lorsque le capteur est soumis à une accélération définie, le courant mesuré ne correspond pas de façon exacte à la variation de la fréquence de vibration de l'élément vibrant, le courant recueilli comportant un courant perturbateur s'ajoutant au courant utile d'une façon perturbant l'information utile et pouvant aller jusqu'à provoquer une saturation de l'électronique de mise en oeuvre du capteur et donc un dysfonctionnement de l'accéléromètre.

### OBJET DE L'INVENTION

Un but de l'invention est de minimiser le courant perturbateur se superposant au courant utile.

### RESUME DE L'INVENTION

Selon une constatation qui fait partie de l'invention, il a été analysé que le courant perturbateur est en majeure partie généré par des portions perturbatrices du circuit d'excitation dans lesquelles deux pistes conductrices s'étendent l'une à côté de l'autre de part et d'autre d'un plan médian d'une partie de plaque subissant des déformations lorsque le capteur est soumis à une accélération. Il a en effet été constaté que des charges de signes opposés apparaissent alors de part et d'autre du plan médian et sont recueillies par la piste conductrice la plus proche de sorte que ces charges génèrent un courant perturbateur. Typiquement, dans les capteurs existants, les pistes conductrices ont une largeur de 50 µm.

Selon l'invention, on prévoit dans les portions de circuit perturbatrices, des branches de compensation associées à des portions de piste conductrices perturbatrices correspondantes, chaque branche de compensation ayant une extrémité reliée à la portion de piste conductrice perturbatrice correspondante et s'étendant sur un côté opposé à la portion de piste conductrice perturbatrice correspondante par rapport au plan médian. Ainsi, la branche de compensation reçoit des charges électriques de signe opposé à celles que reçoit la portion de piste conductrice perturbatrice correspondante de sorte que les charges recueillies par la branche de compensation annulent au moins partiellement les charges recueillies par la portion de piste conductrice perturbatrice correspondante, et le courant perturbateur est donc réduit.

Selon des aspects avantageux de l'invention, les portions de piste conductrices perturbatrices et les branches de compensation s'étendent parallèlement les unes aux autres et sont montées tête-bêche en étant imbriquées les unes dans les autres.

Selon un autre aspect avantageux de l'invention, dans la portion de circuit perturbatrice, les portions de piste conductrices perturbatrices ont une largeur inférieure à 50 µm de préférence une largeur comprise entre 5 µm et 20 µm. Le courant perturbateur initial se trouve ainsi réduit de sorte qu'une faible compensation est suffisante pour éliminer le courant perturbateur.

### BREVE DESCRIPTION DES DESSINS

D'autres caractéristiques et avantages de l'invention apparaîtront à la lecture de la description qui suit d'un mode de réalisation particulier non limitatif de l'invention, en relation avec les figures ci-jointes parmi lesquelles :
- la figure 1 est une vue en perspective agrandie d'un mode de réalisation préféré du capteur inertiel selon l'invention,
- la figure 2 est une vue de dessus partielle encore agrandie d'une de la zone II de la figure 1.

### DESCRIPTION DETAILLEE DE L'INVENTION

En référence aux figures, le capteur selon l'invention comporte de façon connue en soi du document précité une plaque en quartz piézo-électrique 1 dans laquelle sont délimités: un organe support 2 destiné à être fixé dans un boîtier, un cadre de découplage 3 ayant un côté relié à l'organe support 2 par un pontet 4, et un côté opposé relié à une première masse 5 par un pontet 6, une seconde masse 7 reliée à la première masse 5 et au pontet 6 par des éléments de liaison 8, et un élément vibrant 9 ayant des extrémités solidaires des masses 5 et 7, tous ces éléments étant obtenus par gravure de la plaque piézo-électrique 1.

De façon également connue en soi, l'organe vibrant 9 porte des électrodes d'excitation 10 reliées à un circuit d'excitation comportant deux pistes conductrices 11 reliées à des bornes d'alimentation et de mesure 12. Au niveau des pontets 4 et 6, lesquels subissent des déformations lorsque le capteur est soumis à une accélération, le circuit d'excitation comporte des portions de circuit 13 dans lesquelles des portions de pistes conductrices portant la référence générale 15 et les références particulières 15.1 et 15.2 s'étendent l'une à côté de l'autre de part et d'autre d'un plan médian M des pontets.

Ainsi qu'il a été indiqué ci-dessus, il a été constaté selon l'invention que la structure de ces portions de circuit est génératrice d'un courant perturbateur.

Selon l'invention, dans les portions de circuit perturbatrices 13, des branches de compensation portant la référence générale 14 et les références particulières 14.1 et 14.2 sont associées aux portions de piste conductrices perturbatrices 15, chaque branche de compensation 14 ayant une extrémité reliée à la portion de piste conductrice perturbatrice correspondante 15 et s'étendant parallèlement à celle-ci sur un côté opposé à la portion de piste conductrice perturbatrice correspondante par rapport au plan médian M.

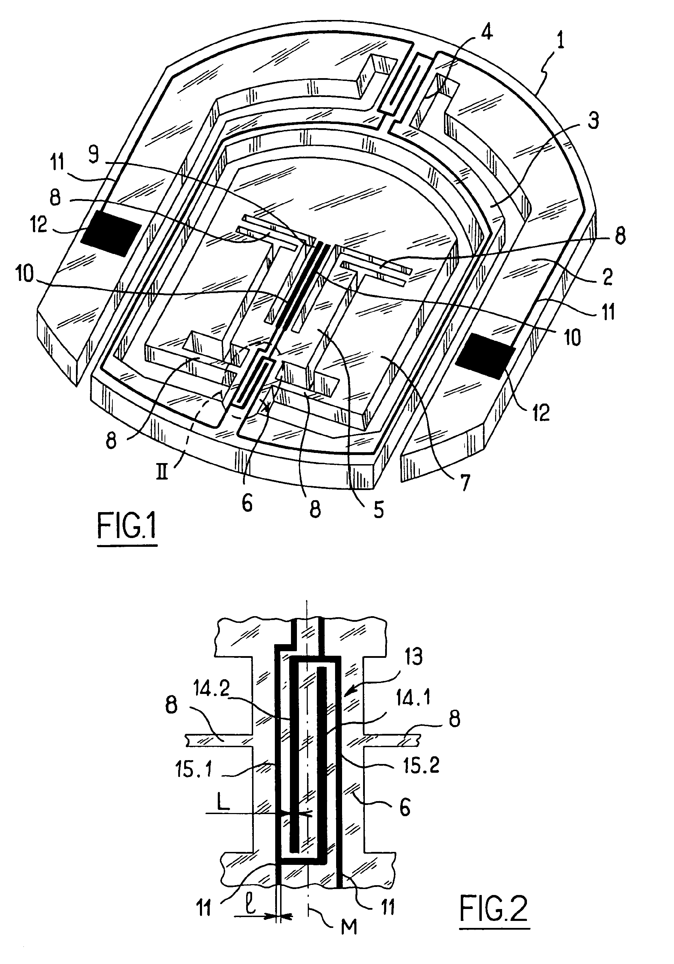

De préférence, comme illustré sur la figure 2, les branches de compensation 14 sont montées tête-bêche et sont imbriquées l'une dans l'autre. On notera à ce propos que la distance des branches de compensation par rapport au plan médian est légèrement inférieure à la distance de la portion de piste conductrice perturbatrice correspondante.

Afin de compenser complètement le courant perturbateur, les branches de compensation ont donc une largeur L légèrement supérieure à la largeur l de la portion de piste conductrice perturbatrice correspondante dans des proportions qui sont fonction des distances effectives de la branche de compensation et de la portion de piste conductrice perturbatrice correspondante par rapport au plan médian M.

De préférence, afin de réduire le courant perturbateur à compenser, les portions de pistes conductrices 15 ont une largeur l inférieure à 50 *µ*m, et de préférence une largeur de 10 *µ*m ou à tout le moins une largeur comprise entre 5 *µ*m et 20 *µ*m.

Bien entendu, l'invention n'est pas limitée au mode de réalisation décrit et on peut y apporter des variantes de réalisation sans sortir du cadre de l'invention tel que défini par les revendications.

En particulier, l'invention s'applique à tout capteur dont le circuit d'excitation comporte une portion de circuit perturbatrice dans laquelle deux pistes conductrices s'étendent l'une à côté de l'autre de part et d'autre d'un plan médian d'une partie de la plaque subissant des déformations lorsque le capteur est soumis à une accélération, quelle que soit par ailleurs la structure du capteur. A titre d'exemple non limitatif la masse 5 peut être totalement intégrée au cadre de découplage 3 de sorte que le capteur comporte alors une seule portion de circuit perturbatrice (sur le pontet 4). Le capteur peut également comporter une première masse 5 directement reliée à l'organe support. Comme dans le cas précédent, le capteur comporte alors une seule portion de circuit perturbatrice. A l'inverse le capteur peut comporter plusieurs éléments associés en cascade, multipliant le nombre de portions de circuit perturbatrices.

## Revendications

1. Capteur inertiel comportant une plaque piézo-électrique (1) dans laquelle est délimité un organe vibrant (9) portant des électrodes d'excitation (10) reliées à un circuit d'excitation comportant des pistes conductrices (11) portées par la plaque piézo-électrique, le circuit d'excitation comportant une portion de circuit perturbatrice (13) dans laquelle deux pistes conductrices (11) s'étendent l'une à côté de l'autre de part et d'autre d'un plan médian d'une partie (4, 6) de la plaque subissant des déformations lorsque le capteur est soumis à une accélération, **caractérisé en ce que** dans la portion de circuit perturbatrice (13) des branches de compensation (14) sont associées à des portions de piste conductrices perturbatrices correspondantes (15), chaque branche de compensation (14) ayant une extrémité reliée à une portion de piste conductrice perturbatrice correspondante (15) et s'étendant sur un côté opposé à la portion de piste conductrice perturbatrice (15) par rapport au plan médian (M).

2. Capteur selon la revendication 1, **caractérisé en ce que** les portions de pistes conductrices perturbatrices (15) et les branches de compensation (14) s'étendent parallèlement les unes aux autres.

3. Capteur selon la revendication 2, **caractérisé en ce que** les branches de compensation (14) sont montées tête-bêche et sont imbriquées l'une dans l'autre.

4. Capteur selon la revendication 1, **caractérisé en ce que** la branche de compensation (14) a une largeur (L) supérieure à la portion de piste conductrice perturbatrice correspondante (15).

5. Capteur selon la revendication 1, **caractérisé en ce que** les portions de piste conductrices perturbatrices ont une largeur inférieure à 50 *µ*m.

6. Capteur selon la revendication 5, **caractérisé en ce que** les portions de piste conductrices perturbatrices (15) ont une largeur comprise entre 5 *µ*m et 20 *µ*m.

7. Capteur selon la revendication 6, **caractérisé en ce que** les portions de piste conductrices perturbatrices (15) ont une largeur (l) 10 *µ*m.

## Patentansprüche

1. Inertialsensor, umfassend eine piezoelektrische Scheibe (1), in der ein Schwingelement (9) begrenzt ist, das Anregungselektroden (10) trägt, die mit einem Anregungskreis verbunden sind, der Leiterbahnen (11) umfasst, die von der piezoelektrischen Scheibe getragen werden, wobei der Anregungskreis einen Störkreisabschnitt (13) umfasst, in dem sich zwei Leiterbahnen (11) nebeneinander zu beiden Seiten einer Mittelebene eines Abschnitts (4, 6) der Scheibe erstrecken, der Verformungen erfährt, wenn der Sensor einer Beschleunigung unterzogen wird, **dadurch gekennzeichnet, dass** in dem Störkreisabschnitt (13) Kompensationspfade (14) mit entsprechenden Störleiterbahnabschnitten (15) verbunden sind, wobei jeder Kompensationspfad (14) ein Ende hat, das mit einem entsprechenden Störleiterbahnabschnitt (15) verbunden ist, und sich auf einer in Bezug auf die Mittelebene (M) zum Störleiterbahnabschnitt (15) entgegengesetzten Seite erstreckt.

2. Sensor nach Anspruch 1, **dadurch gekennzeichnet, dass** sich die Störleiterbahnabschnitte (15) und die Kompensationspfade (14) parallel zueinander erstrecken.

3. Sensor nach Anspruch 2, **dadurch gekennzeichnet, dass** die Kompensationspfade (14) entgegengesetzt montiert und ineinander verschachtelt sind.

4. Sensor nach Anspruch 1, **dadurch gekennzeichnet, dass** der Kompensationspfad (14) eine Breite (L) hat, die größer als der entsprechende Störleiterbahnabschnitt (15) ist.

5. Sensor nach Anspruch 1, **dadurch gekennzeichnet, dass** die Störleiterbahnabschnitte eine Breite haben, die kleiner als 50 µm ist.

6. Sensor nach Anspruch 5, **dadurch gekennzeichnet**, das die Störleiterbahnabschnitte (15) eine Breite zwischen 5 µm und 20 µm haben.

7. Sensor nach Anspruch 6, **dadurch gekennzeichnet**, das die Störleiterbahnabschnitte (15) eine Breite (l) von 10 µm haben.

## Claims

1. Inertial sensor including a piezoelectric plate (1) in which there is defined a vibrating member (9) carrying excitation electrodes (10) connected to an excitation circuit including conductive tracks (11) carried by the piezoelectric plate, the excitation circuit including a disturbing circuit portion (13) in which two conductive tracks (11) extend next to each other on either side of a median plane of a part (4, 6) of the plate that is deformed when the sensor is subjected to acceleration, **characterised in that** compensation branches (14) in the disturbing circuit portion (13) are associated with corresponding disturbing conductive track portions (15), each compensation branch (14) having one end connected to a corresponding disturbing conductive track portion (15) and lying on the opposite side of the median plane (M) to the disturbing conductive track portion (15).

2. Sensor according to claim 1, **characterised in that** the disturbing conductive track portions (15) and the compensation branches (14) are parallel to one another.

3. Sensor according to claim 2, **characterised in that** the compensation branches (14) are disposed head-to-tail and are interleaved with one another.

4. Sensor according to claim 1, **characterised in that** the compensation branch (14) has a width (L) greater than the corresponding disturbing conductive track portion (15).

5. Sensor according to claim 1, **characterised in that** the disturbing conductive track portions have a width less than 50 µm.

6. Sensor according to claim 5, **characterised in that** the disturbing conductive track portions (15) have a width between 5 µm and 20 µm.

7. Sensor according to claim 6, **characterised in that** the disturbing conductive track portions (15) have a 10 µm width (l).
